# EUROPEAN PATENT SPECIFICATION

(11) **EP 4 137 466 B1**
(45) Date of publication and mention of the grant of the patent: **31.01.2024**
(21) Application number: 21192301.6
(22) Date of filing: 20.08.2021
(51) Int. Cl.: C03B 9/41, G05B 19/406, G05B 19/409, G05B 19/418

(54) **ANOMALY PROCESSING SYSTEM FOR A GLASS FORMING MACHINE**
ANOMALIEVERARBEITUNGSSYSTEM FÜR EINE GLASFORMMASCHINE
SYSTÈME DE TRAITEMENT D'ANOMALIES POUR MACHINE DE FORMATION DU VERRE

(43) Date of publication of application: 22.02.2023
(73) Proprietor: Emhart Glass S.A., 6312 Steinhausen (CH)
(72) Inventor: Diehm, Leo, 6330 Cham (ZG) (CH); Bewer, Thomas Alexander, 8805 Richterswil (ZH) (CH); von Ah, Christian Peter, 8604 Volketswil (ZH) (CH)
(74) Representative: Gille Hrabal Partnerschaftsgesellschaft mbB Patentanwälte

(56) References cited:
- EP-A2- 3 034 475
- US-A1- 2020 394 603
- US-B2- 10 509 390

## Description

The invention relates to an anomaly processing system suitable for processing a malfunction of a glass forming machine.

A glass forming machine within the meaning of the present invention is a system for producing articles made of glass. The glass forming machine may be one that continuously produces articles. The articles may be produced from raw materials and/or semi-finished articles.

The glass forming machine can be such that it produces the articles fully automatically and thus without the help of an operator.

Malfunctions can occur in glass forming machines. Malfunctions can result in a desired production quality not being achieved. Malfunctions can lead to an interruption in production. Because malfunctions can occur, glass forming machine plants are monitored. An operator can monitor the glass forming machine. An operator can detect a malfunction. The operator can then take action to correct the malfunction.

An anomaly processing system can detect a malfunction. The anomaly processing system can then control the glass forming machine to correct the malfunction or to minimize problems. For example, the anomaly processing system can stop the production completely if a malfunction is detected.

EP 3 034 475 A2 relates to a control unit for controlling a section of an individual section type glass forming machine. The control unit includes an operator interface configured to receive a first input and a second input from an operator upon which power can be supplied selectively a first or a second plurality of mechanisms. US 10 509 390 B2 describes a method of processing an anomaly of a cooling unit or a laser. US 2020 / 394 603 A1 describes a method for preparing ingredients stored in ingredient containers for at least one dish.

The object of the present invention is to improve malfunction processing.

The object is solved by an anomaly processing system which is suitable for processing a malfunction of a glass forming machine. The anomaly processing system comprises a presence detection unit for detecting the presence of an operator, a malfunction detection unit for detecting a malfunction during the production, and a control unit for controlling the glass forming machine in the event of a detected malfunction. The anomaly processing system is configured such that, in the event of a detected malfunction, the control of the glass forming machine by the control unit is dependent on whether the presence of an operator has been detected by the presence detection unit.

There may be a malfunction that cannot be corrected with the help of an anomaly processing system, but easily and quickly by an operator. The malfunction may cause damage. The amount of damage may depend on how long production continues. If, in such a case, an operator can quickly and easily eliminate the malfunction, it is not necessary to stop production automatically. The invention then makes it possible, for example, to stop production only when the system has not detected the presence of an operator. Thus, because the anomaly processing system is set up to respond depending on the presence of an operator, it can respond to malfunctions in an improved manner.

For example, there may be a malfunction because a semi-finished article is not forwarded by a forwarding unit. If not corrected quickly, this problem can lead to greater damage. However, if the problem can be quickly and easily corrected, virtually no damage may occur. Interruption of production is not necessary in such a case if an operator is present.

A malfunction within the meaning of the present invention refers to a state outside predefined limits during the production of articles by a glass forming machine. Malfunctions may occur due to a sub-optimal configuration of the settings of a glass forming machine, use, wear, human error, and/or hazards, such as draft, vibration, collision, jamming. A malfunction may relate to one or more types, such as:
- deficient supply,
- disorderly forwarding,
- jamming,
- contamination/pollution,
- deficient quality.

A glass forming machine may produce articles with the help of a single processing step or a series of processing steps. A processing step may include heating, melting, cooling, freezing, mixing, filtering, cleaning, cutting, forming, swaging, pressing, blowing, fitting, assembling, printing, coating. The production system may comprise one or more processing stations. A processing station can perform one or more processing steps.

A glass forming machine may comprise one or more forwarding units through which raw materials and/or semi-finished articles and/or finished articles are forwarded. A forwarding unit can be used to forward raw material and/or semi-finished articles from one processing station to another. A forwarding unit can be used to transport finished articles out of the production system. A forwarding unit may comprise dispensers, gutters, channels, conveyor belts, gripper arms such as jaw grippers, magnetic grippers, rotary grippers, and/or pushers.

A malfunction detection unit for detecting a malfunction is a device, module, system or sub-system capable of determining whether or not a malfunction has occurred during the production of articles by a glass forming machine. It may receive information from one or more sensors measuring the state of the production process. A malfunction detection unit may receive information defining the configuration of the glass forming machine, its operating parameter settings, and/or the status of the production process. A malfunction detection unit may combine and analyse the received information in order to determine whether or not a malfunction has actually occurred. It may also determine its type and the location of its occurrence.

For example, a dispensing unit for bottles is known to the anomaly processing system. The anomaly processing system knows how fast bottles are dispensed through the dispensing unit during production. This information can be stored in a memory unit of the anomaly processing system. In such a case, the malfunction detection unit records, for example, how quickly bottles are dispensed via the dispensing unit with the help of a camera or with the help of a light barrier. If the malfunction detection unit detects that the speed at which bottles are dispensed differs from the stored speed, the malfunction detection unit detects a malfunction. There may be a stored threshold value for the speed. Only when the threshold is exceeded does the unit detect a malfunction.

An operator is a person. An operator may be charged with supervising and/or operating a glass forming machine.

A presence detection unit for detecting the presence of an operator is a device, module, system or sub-system capable of determining whether or not a person, in particular an operator, is present at a location or a range of locations. It may receive information from one or more sensors capable of detecting the presence of a person. It may also detect the precise location of the presence and the identity of the person.

The detection of a presence can be done with the help of a camera, for example. The presence detection unit can then analyse images captured by the camera and recognise people in images. If the presence detection unit detects a person in an image, this can be considered as the presence of an operator.

A control unit for controlling a glass forming machine is a device, module, system or sub-system capable of altering the configuration and/or the operating parameter settings of a glass forming machine.

The control unit can, for example, be set up in such a way that in the event of a detected malfunction, production is stopped if no operator is present. If a malfunction is detected and an operator is present, the control unit can be configured in such a way that production is not stopped. It is then up to the operator to decide what to do.

The control unit may be capable of controlling configuration and/or the operating parameter settings of a glass forming machine. In the event of a malfunction, the control unit can then reduce the speed of production, for example. This can be done depending on whether an operator has been detected as being present.

The control unit may be capable of reading and/or transmitting information about the configuration and/or the operating parameter settings of a glass forming machine. The control unit can, for example, register the speed at which glass bottles are produced. Such information can be used by the control unit to decide how to react in case of a malfunction.

A sensor is a device, module, system or sub-system capable of detecting events and/or changes in its environment and sending this information to other electronics. A sensor is sensitive to the measured property. A sensor is insensitive to any other property likely to be encountered in its application. A sensor does not influence the measured property.

Examples of sensor types include analogue devices, microelectromechanical systems, optical, vibrational, electro-chemical, (micro-)electronic systems.

Examples of sensors include potentiometers, force sensing resistors, light barriers, photoelectric or infrared sensors, RFID localisation systems, radar, LIDAR and other camera systems of electromagnetic waves combined or not with computer implemented and/or artificial intelligence-based image processing systems.

Examples of properties measured by sensors include temperature, pressure, flow, force, acceleration, attitude, heading, electromagnetic properties, chemical and/or physical properties of materials, detection and/or identification of people and objects, their respective physical and/or psychological states, and/or the overall situation made up by them.

Sensors configured to detect means installing one or more sensors with suitable measurement properties with regard to the actual events that can be expected to take place, at suitable locations in order to detect malfunctions and/or the presence of an operator.

For example, a potentiometer connected to an actuator motor driving a gripper arm is suitable to detect malfunctions of a gripper arm. Light barriers placed along the production line may detect missing and/or out of place semi-finished and/or finished articles. Light barriers can be used to detect a person entering or leaving a location. RFID based localization systems can be used to detect a person's location and/or identity.

The presence of a person may be detected whenever a person is detected by a sensor configured to detect the presence of a person. For example, a light barrier installation at the entrance of an area detects the presence of a person when the light barrier installation detects a passage towards that area. An RFID based localisation system may detect the presence of a person when a RFID chip is recognised by its sensors/ is within reach of its sensors.

The presence detection unit may be configured to detect the presence of an operator only if the distance between the location of the operator and the location of the detected malfunction does not exceed 15 meters, in a preferred embodiment only if the distance does not exceed 5 meters, and in a most preferred embodiment only if the distance does not exceed 1 meter. Thus, the risk is reduced that the presence of an operator is detected although the operator is not in a position to quickly detect and correct the malfunction.

The distance may be defined as the length of a straight line connecting the two locations, or the distance may be defined as the length of the walking path from one location to the other location.

An anomaly processing system according to the present invention may comprise a camera. A camera is an optical instrument, device, module, system or sub-system that captures an image. At its most basic, a camera is a sealed box, the camera body, with a small hole, the aperture. The aperture allows light in to capture an image on a light-sensitive surface, usually a digital sensor. Within the meaning of the present invention light refers to electromagnetic radiation. The electromagnetic radiation may or may not belong to the portion of the electromagnetic spectrum that is visible to the human eye. Thus, a camera may allow to observe properties of the glass forming machine during the production of articles otherwise not visible to an operator. Thus, malfunction processing may be further improved. The camera may be part of the presence detection unit and/ or part of the malfunction detection unit.

A camera may be configured to comprise or to be combined with an image processing system. An image processing system is a system that can receive and analyse image data. Dependent on the characteristics of the electromagnetic radiation captured to create the image and/or the image processing system, different properties can be detected. Example of such properties include temperature, motion, absence, presence, location, distance, shape, appearance, identity, compliance and/or non-compliance with predefined states of people and/or objects. The image processing system may be part of the presence detection unit and/ or part of the malfunction detection unit.

Thus, a camera can serve as sensor that can detect malfunctions and/or the presence of an operator within its viewing area. In particular, the presence of an operator may be detected whenever a person enters the viewing area of the camera. It may detect the presence of an operator only in case the detected person is recognised as an operator. The system may therefore include personal identification. The system may include a memory with persons stored therein as operators. Only if a detected person matches a stored person, the presence of an operator is detected.

In a preferred embodiment, a glass forming machine may produce containers. A container can be a glass bottle. A glass forming machine may comprise a blank station and a blow station. A blank station can be fed with a gob of molten glass. A blank station can comprise a blank mould and/or a neck ring below the blank mould and/or a plunger to form a parison from a gob of molten glass. A blow station can comprise a blow mould and/or a blowing device to blow up a parison to form a container. A glass forming machine may comprise a forwarding unit for forwarding a parison from a blank station to a blow station. Such a forwarding unit can comprise an invert mechanism for transporting a neck ring together with a parison from a blank station to a blow station. A glass forming machine may comprise a forwarding unit for discharging a container from a blow station. Such a forwarding unit can comprise a pusher and/or a conveyor belt. A coating hood can be positioned above a section of the conveyor belt.

A camera can be positioned so that it captures a blank station and a blow station within its viewing area. This way, the technical effort to implement the anomaly processing system according to the present invention can be reduced. To this effect, a camera may be positioned in front or on top of a glass forming machine. The viewing area of a camera positioned in this way may also include the forwarding unit transporting a parison from a blank station to a blow station. The viewing area may also include the mechanism feeding a blank station with a gob of molten glass. This way, the technical effort to implement the anomaly processing system according to the present invention can be even further reduced.

A camera can be positioned so that it captures a conveyor belt and a coating hood within its viewing area. This way, the technical effort to implement the anomaly processing system according to the present invention can be reduced. To this effect, a camera may be positioned in front or on top of the conveyor belt. The viewing area of a camera positioned in this way may also include the forwarding unit transporting articles from a blow station to the conveyor belt. The viewing area may also include the space around the conveyor belt, where an operator may be present to supervise and/or operate the glass forming machine. This way, the technical effort to implement the anomaly processing system according to the present invention can be even further reduced.

An anomaly processing system according to the present invention may detect a deficient supply of gobs of molten glass. The anomaly processing system is configured to avoid greater damage. Therefore, if the presence of an operator is not detected, the glass forming machine may be controlled to reject all incoming gobs. Also, sections of the glass forming machine may be shut down/moved to safe state. However, if the presence of an operator is detected, the operator may quickly take corrective action. In particular, an operator may remove globs of molten glass blocking the supply of gobs. Therefore, the glass forming machine may be controlled to continue production without interruption or with a reduced speed.

An anomaly processing system according to the present invention may detect articles sticking together. The anomaly processing system is configured to avoid greater damage. Therefore, if the presence of an operator is not detected, the glass forming machine may be controlled to shut down / to move sections of the glass forming machine to a safe state. However, if the presence of an operator is detected, the operator may quickly remove the articles sticking together. Therefore, the glass forming machine may be controlled to continue production without interruption or with a reduced speed.

An anomaly processing system according to the present invention may detect articles out of place and/or fallen over. The anomaly processing system is configured to avoid greater damage. Therefore, if the presence of an operator is not detected, the glass forming machine may be controlled to shut down / to move sections of the glass forming machine to a safe state. However, if the presence of an operator is detected, the operator may quickly put the articles back in place and/or put the articles upright. Therefore, the glass forming machine may be controlled to continue production without interruption or with a reduced speed.

An anomaly processing system according to the present invention may detect a jam of articles. The anomaly processing system is configured to avoid greater damage. Therefore, if the presence of an operator is not detected, the glass forming machine may be controlled to shut down / to move sections of the glass forming machine to a safe state. However, if the presence of an operator is detected, the operator may quickly remove the jam of articles. Therefore, the glass forming machine may be controlled to continue production without interruption or with a reduced speed.

An anomaly processing system according to the present invention may frequently/repeatedly detect articles failing to meet the desired quality. The anomaly processing system is configured to avoid greater damage. Therefore, if the presence of an operator is not detected, the glass forming machine may be controlled to shut down / to move sections of the glass forming machine to a safe state. However, if the presence of an operator is detected, the operator may quickly determine the cause of the deficient quality. The operator may then manually initiate an adequate corrective action. Therefore, the glass forming machine may be controlled to just rejecting articles failing to meet the desired quality while continuing the production without interruption or with a reduced speed.

A software suitable to control the execution of the anomaly processing according to the present invention may be separately stored on a storage medium. A storage medium is a suitable medium to place, keep and retrieve electronic data. Examples of storage media include optical and magnetic disks, tapes, flash storage, cloud storage, random access memory, read only memory.

In the following the invention is described in more detail with the help of the examples shown in the figures 1 - 6.
Figure 1 illustrates the structure of a glass forming machine.
Figure 2 shows an example of an anomaly processing system 16 according to the present invention.
Figures 3 and 4 show examples of preferred positionings of cameras 20 at a glass forming machine 1.
Figure 5 shows an example of the workings of an anomaly processing system 16 according to the present invention.
Figure 6 shows examples of malfunctions and machine controls to be executed by the anomaly processing system 16 according to the present invention.

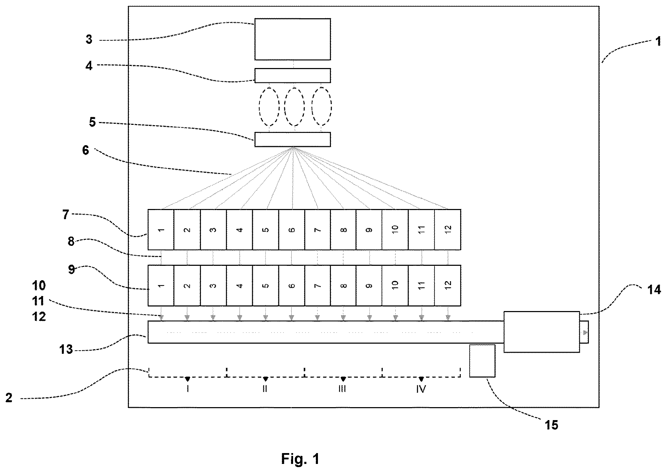

Figure 1 shows an example of the structure of a glass forming machine 1 for the continuous mass production of glass bottles. The glass forming machine 1 comprises four sections 2, each of which produces a set of three glass bottles in parallel. Thus, the glass forming machine 1 comprises twelve production lines for the production of glass bottles.

A blank station 7 may comprise a blank mould consisting of two halves, a neck ring below the blank mould, and a plunger. A blow station 9 may comprise a blow mould, consisting of two halves, and a blow head. An invert 8 may comprise a rotating arm.

To produce a glass bottle, molten glass flows from a spout 3 to a shear 4. The shear 4 cuts the flow of melted glass into gobs. A gob is forwarded by a gob distributor 5 and a gutter 6 to a blank station 7. The two halves of the blank mould are closed. The gob is loaded into the blank mould of the blank station 7. A plunger moves into the blank mould to form a parison from the gob. The two halves of the blank mould open. An invert 8 moves the neck ring of a blank station together with the parison to a blow station 9. The two halves of the blow mould are closed. A blow head moves down on the blow mould of the blow station 9 and blows up the parison to form a glass bottle. The two halves of the blow mould open. A take-out arm 10 takes the glass bottle out of the blow station 9 and puts it on a cooling plate 11. A pusher 12 moves the glass bottle from the cooling plate 11 to a conveyer belt 13. The conveyor belt 13 moves the glass bottle to a coating hood 14. The coating hood 14 applies a coating to the glass bottle. In case a glass bottle does not meet desired quality standards, a bottle-reject 15 removes the glass bottle from the conveyor belt 13 shortly before the glass bottle enters the coating hood 14.

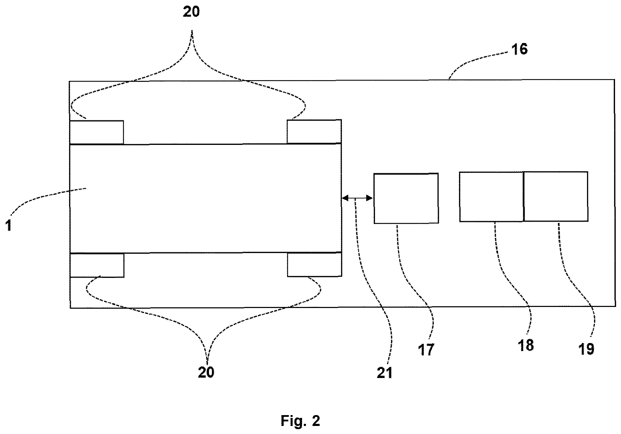

Figure 2 shows an example of an anomaly processing system 16 according to the present invention.

An anomaly processing system 16 comprises a control unit 17, a malfunction detection unit 18, and a presence detection unit 19. The control unit 17 is connected through a link 21 to a glass forming machine 1. The anomaly processing system 16 comprises sensors 20. The sensors 20 are suitably placed at the glass forming machine 1 to detect a malfunction of the glass forming machine 1 and/or the presence of an operator.

Sensors 20 may be light barriers, photoelectric or infrared sensors, and the like. Inverts 8, take-out arms 10, pushers 12, conveyer belts may be driven by actuator motors. Thus, also potentiometers may be used to monitor their workings and to detect malfunctions.

Equally, light barriers, photoelectric or infrared sensors, and the like are suitable sensors 20 to detect the presence and/or the location of an operator. An operator may be equipped with an active or passive signalling device, for example an RFID chip. An RFID-based localisation system may then determine an operator's presence, for example depending on the RFID chip coming within reach of the RFID based localisation system's sensors 20. It may detect the presence of an operator only if an RFID chip, which identifies a person as an operator, is detected by the sensors (20) of the system. It may detect the presence of an operator only if the distance between the location at which the operator is detected and the location of a detected malfunction is not exceeding 15/5/1 meter.

The sensors 20 may be cameras. The cameras may comprise or be connected to an image processing system. The image processing system may be capable of detecting malfunctions, the place of detected malfunctions, the presence of a person at a location within the viewing area of a camera, and/or the identity of that person. Such a camera-based detection system may then determine an operator's presence, for example depending on a person being present within the viewing area of a camera. It may detect the presence of an operator only if it recognises a person as an operator. It may detect the presence of an operator only if the distance between the location at which the operator is detected and the location of a detected malfunction is not exceeding 15/5/1 meter.

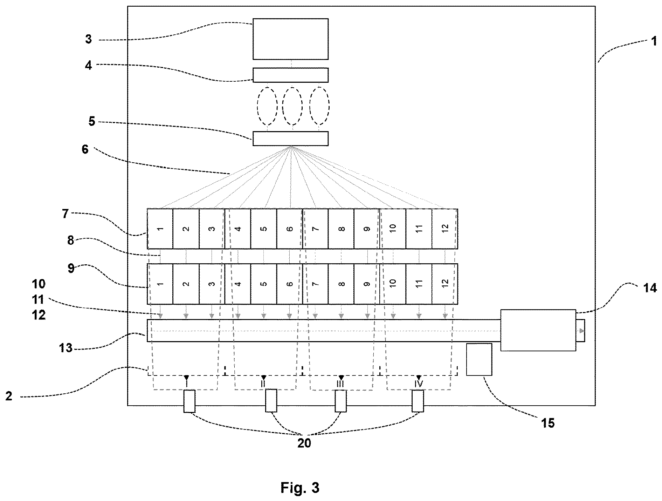

Figure 3 shows an example of a preferred positioning of cameras serving as sensors 20 at a glass forming machine 1. A camera 20 is placed in front and/or on top of each section 2 of a glass forming machine 1. This way, one camera 20 can monitor at least three production lines of a glass forming machine 1. Each production line comprises a set of three blank stations 7, a set of three blow stations 9, and a take-out arm 10, a cooling plate 11, and a pusher 12 for three glass bottles.

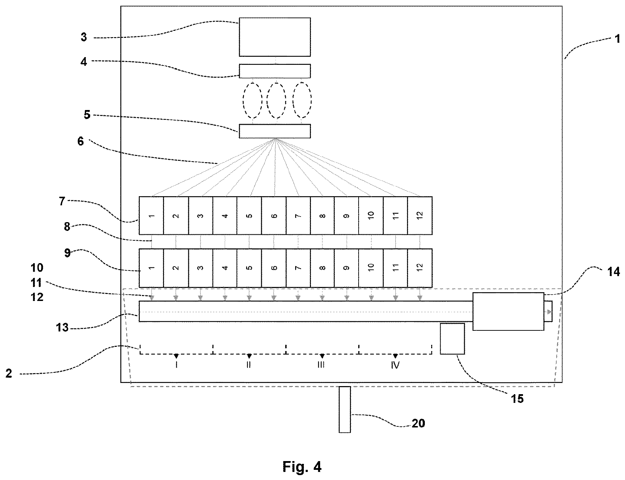

Figure 4 shows another preferred positioning of a camera serving as sensor 20. A camera 20 is positioned in front and/or on top of a conveyor belt 13. This way the viewing area of the camera includes the conveyor belt 13, the coating hood 14, the bottle-reject 15, and the space around the conveyor belt 13, where an operator may be present. This way, one camera 20 can monitor at least the entire conveyor belt 13, the coating hood 14, the bottle-reject 15, as well as the space around the conveyor belt 13, where an operator may be present.

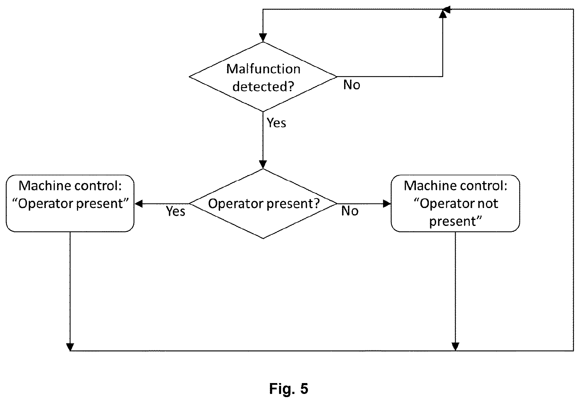

Figure 5 shows an example of the workings of an anomaly processing system 16 according to the present invention. In the event that a malfunction is detected, the anomaly processing system 16 checks for the presence of an operator. In case the presence of an operator is not detected, the anomaly processing system 16 executes the controls according to the "Machine control: operator not present" controls. In case the presence of an operator is detected, the anomaly processing system 16 executes the controls according to the "Machine control: operator present" controls.

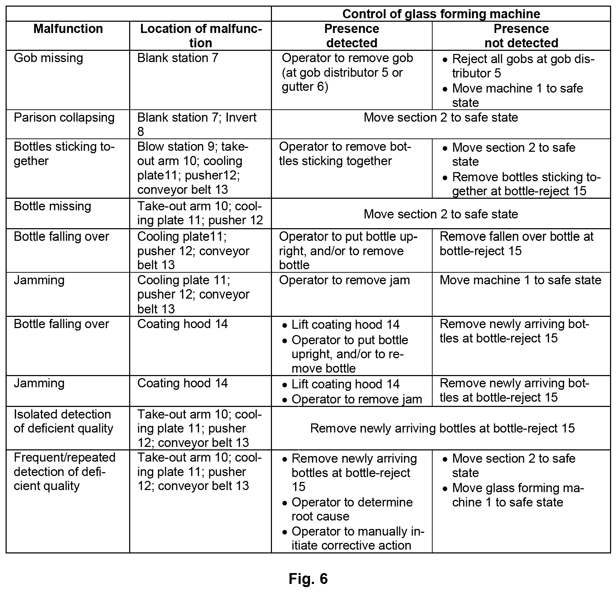

Figure 6 shows an example of how the anomaly processing system 16 controls the glass forming machine 1 dependent on the detected malfunction, its location and the detected presence of an operator.

For example, the anomaly processing system 16 may detect that a gob is missing at a blank station 7. Usually, this is caused by a gob stuck at the gob distributor 5 and/or at the gutter 6. This can cause a jam blocking the production, and/or damage the glass forming machine 1. Therefore, if the presence of an operator is not detected, the anomaly processing system 16 controls the glass forming machine 1 in a way that all or a major part of the gobs are rejected before entering the gob distributor 5. Or, a section 2 or the entire glass forming machine 1 is moved to a safe state.

This entails that the production of glass bottles is interrupted, and/or the incoming gobs are waisted. However, if the presence of an operator is detected, the operator can easily and quickly remove stuck gobs from the gob distributor 5 and/or the gutter 6. Therefore, if the presence of an operator is detected, the anomaly processing system 16 controls the glass forming machine 1 in a way that the production process is not interrupted and hardly any gobs are waisted.

Moving to as safe state may require that a glass forming machine 1, or part of it, is shut down. In such a case, the production process down-stream of the malfunction may continue until all down-stream articles have been discharged. However, the entire production may also stop immediately without discharging any articles.

In case a collapsed parison is detected, the anomaly processing system 16 controls the affected section 2 of the glass forming machine 1 in a way that it is moved to a safe state. Thus, the operator is given the opportunity to remove the collapsed parison.

The anomaly processing system 16 may detect as a malfunction that bottles are sticking together. This malfunction may be detected at the blow station 9, the take-out arm 10, the cooling plate 11, and/or the pusher 12. If the presence of an operator is not detected, the anomaly processing system 16 controls the glass forming machine 1 in way that the bottles sticking together are removed at the bottle-reject 15. However, since there is a risk that the bottles sticking together fall over and/or cause a jam, the anomaly processing system 16 may also control the machine to shut down the concerned section immediately. However, if the presence of an operator is detected, the operator can easily and quickly remove the bottles. Thus, the production is not interrupted and the risk of any further escalation or damage is avoided.

In case a bottle missing is detected at the take-out arm 10, cooling plate 11, or the pusher 12, the anomaly processing system 16 may check if this due to the operating parameter settings. For example, it may be that the section was moved to a safe state so that the missing of the bottle is intentional. If the check shows that the missing of the bottle is not intentional, the anomaly processing system 16 moves the glass forming machine 1 to a safe state. Thus, the operator is given the opportunity to remove any out of place article or jam of articles upstream of the location of the detected malfunction "bottle missing".

The anomaly processing system 16 may detect glass bottles out of place/fallen over at the cooling plate 11, the pusher 12, or the conveyor belt 13. The anomaly processing system 16 may detect a jam of glass bottles at the cooling plate 11, the pusher 12, the conveyor belt 13. If the presence of an operator is not detected, the anomaly processing system 16 controls the glass forming machine 1 in a way that all sections 2 located upstream of the jam are moved to a safe state, i.e., are shut down immediately. Thus, further escalation of the malfunction and/or further damage to the glass forming machine 1 is avoided. However, if the presence of an operator is detected, the operator can quickly and easily put the bottles back in place, and/or remove the bottles, or remove the jam. Hence, no section needs to be shut down.

The anomaly processing system 16 may detect glass bottles out of place/fallen over at the coating hood 14. The anomaly processing system 16 may detect a jam of glass bottles at the coating hood 14. If the presence of an operator is not detected, the glass forming machine 1 is controlled in way that all newly arriving glass bottles are rejected at the bottle-reject 15. However, if the presence of an operator is detected, the anomaly processing system 16 makes the glass forming machine 1 lift the coating hood 14. Thus, an operator can quickly and easily put the bottles back in place, and/or remove the bottles, or remove the jam. Hence, the production of glass bottles can continue uninterrupted.

The anomaly processing system 16 may detect a glass bottle failing to meet the desired quality at the take-out arm 10, the cooling plate 11, the pusher 12; and/or the conveyor belt 13. The anomaly processing system 16 may just remove the bottle at the bottle-reject 15. However, it may be that such a malfunction, i.e., bottles failing to meet the desired quality, is frequently/repeatedly detected. In this case, the malfunction processing system may move affected sections 2 or the entire glass forming machine 1 to a safe state. This avoids the risk that the actual cause of the malfunction may also cause unnoticed damage to the glass forming machine 1. However, if the presence of an operator is detected, the anomaly processing system 16 continues to just reject the bottles of deficient quality at the bottle reject. The operator can quickly assess if the malfunction can be corrected without interruption of the production process or not. If no, the operator may manually move part of the glass forming machine 1 or the entire machine into a safe state. If yes, the operator may take the corrective action. In this case the production process can continue without interruption.

## Claims

1. Anomaly processing system (16) suitable for processing a malfunction of a glass forming machine (1), comprising;
a malfunction detection unit (18) for detecting a malfunction of the glass forming machine (1);
a presence detection unit (19) for detecting the presence of an operator;
a control unit (17) for controlling the glass forming machine (1) in the event of a detected malfunction;
**characterized in that** the anomaly processing system (16) is configured such that, in the event of a malfunction, the control of the glass forming machine (1) by the anomaly processing system (1) is dependent on whether the presence of an operator is detected.

2. System according to claim 1 comprising one or more sensors (2) configured to detect a malfunction of the glass forming machine (1), and/or the presence of an operator.

3. System according to one of the preceding claims comprising a control unit (17) suitable for reading and/or setting status information and/or operating/configuration parameters of the glass forming machine (1).

4. System according to one of the preceding claims configured to detect the presence of an operator at the time of the detection of a malfunction only if the distance between the location of the operator and the location of the detected malfunction does not exceed 15 meters, in a preferred embodiment only if the distance does not exceed 5 meters, and in a most preferred embodiment only if the distance does not exceed 1 meter.

5. System according to one of the preceding claims comprising one or more cameras (20).

6. System according to the preceding claim comprising an image processing system configured to detect a malfunction and/or the presence of an operator by processing images captured by the one or more cameras (20).

7. System according to one of the preceding claims suitable for processing malfunctions of a glass forming machine (1), whereas the glass forming machine (1) comprises a blank station (7) for forming a parison from a gob of molten glass, a blow station (9) for forming a container from the parison, a mechanism for forwarding (8) a parison from a blank station (7) to a blow station (9), and a mechanism for forwarding (10, 12, 13) a container from a blow station (9), whereas
a container can be a glass bottle;
a blank station (7) can comprise a blank mould and/or a neck ring below the blank mould and/or a plunger to form a parison from a gob of molten glass;
the blow station (9) can comprise a blow mould and/or a blowing device to blow up a parison to form a container;
a mechanism for forwarding (8) a parison from a blank station (7) to a blow station (9) can comprise an invert mechanism (8) for transporting a neck ring together with a parison to a blow station;
a mechanism for forwarding (10, 12, 13) a container from a blow station (9) can comprise a take-out arm (10), a pusher (12) and/or a conveyor belt (13);
a coating hood can be positioned above a section of the conveyor belt.

8. System according to the preceding claim comprising a camera (20) configured to capture at the same time an image of a blank station (7) and of a blow station (9).

9. System according to the before preceding claim comprising a camera (20) configured to capture at the same time an image of a conveyor belt (13) and of a coating hood (14).

10. System according to one of the preceding claims configured such that, in the event of a missing gob is detected, the glass forming machine (1) is controlled to reject all incoming gobs and/or to move sections (2) to a safe state if the presence of an operator is not detected, whereas to continue production without interruption if the presence of an operator is detected.

11. System according to one of the preceding claims configured such that, in the event of articles sticking together are detected, the glass forming machine (1) may be controlled to move sections (2) to a safe state if the presence of an operator is not detected, whereas to continue production without interruption if the presence of an operator is detected.

12. System according to one of the preceding claims configured such that, in the event of articles out of place, and/or fallen over are detected, the glass forming machine (1) may be controlled to move sections (2) to a safe state if the presence of an operator is not detected, whereas to continue production without interruption if the presence of an operator is detected.

13. System according to one of the preceding claims configured such that, in the event of a jam of articles is detected, the glass forming machine (1) may be controlled to move sections (2) to a safe state if the presence of an operator is not detected, whereas to continue production without interruption if the presence of an operator is detected.

14. System according to one of the preceding claims configured such that, in the event of repeatedly detecting articles failing to meet the desired quality, the glass forming machine (1) may be controlled to move sections (2) to a safe state if the presence of an operator is not detected, whereas to continue production without interruption while only rejecting articles of deficient quality if the presence of an operator is detected.

15. Storage medium comprising a software which comprises instructions to cause the system according to one of the preceding claims to process a malfunction of a glass forming machine (1) in dependence of the presence of an operator.

## Patentansprüche

1. System zur Verarbeitung von Anomalien (16), das zur Verarbeitung einer Störung einer Glasformmaschine (1) geeignet ist, umfassend:
eine Störungsdetektionseinheit (18) zum Detektieren einer Störung der Glasformmaschine (1);
eine Anwesenheitsdetektionseinheit (19) zur Detektion der Anwesenheit eines Bedieners;
eine Steuereinheit (17) zum Steuern der Glasformmaschine (1) im Falle einer detektierten Störung;
**dadurch gekennzeichnet, dass** das System zur Verarbeitung von Anomalien (16) so eingerichtet ist, dass im Falle einer Störung die Steuerung der Glasformmaschine (1) durch das System zur Verarbeitung von Anomalien (1) davon abhängt, ob die Anwesenheit eines Bedieners detektiert wird.

2. System gemäß Anspruch 1, umfassend einen oder mehrere Sensoren (2), die dazu eingerichtet sind, eine Störung der Glasformmaschine (1) und/oder die Anwesenheit eines Bedieners zu detektieren.

3. System gemäß einem der vorhergehenden Ansprüche, umfassend eine Steuereinheit (17), die geeignet ist, Statusinformationen und/oder Betriebs-/Konfigurationsparameter der Glasformmaschine (1) zu lesen und/oder festzulegen.

4. System gemäß einem der vorhergehenden Ansprüche, das dazu eingerichtet ist, die Anwesenheit eines Bedieners zum Zeitpunkt der Detektion einer Störung nur dann zu detektieren, wenn der Abstand zwischen dem Standort des Bedieners und dem Standort der detektierten Störung 15 Meter nicht überschreitet, in einer bevorzugten Ausführungsform nur dann, wenn der Abstand 5 Meter nicht überschreitet, und in einer besonders bevorzugten Ausführungsform nur dann, wenn der Abstand 1 Meter nicht überschreitet.

5. System gemäß einem der vorhergehenden Ansprüche, umfassend eine oder mehrere Kameras (20).

6. System gemäß dem vorhergehenden Anspruch, umfassend ein Bildverarbeitungssystem, das dazu eingerichtet ist, eine Störung und/oder die Anwesenheit eines Bedieners durch die Verarbeitung von Bildern zu detektieren, die von der einen oder den mehreren Kameras (20) aufgenommen wurden.

7. System gemäß einem der vorhergehenden Ansprüche, geeignet zur Verarbeitung von Störungen einer Glasformmaschine (1), wobei die Glasformmaschine (1) eine Vorformstation (7) zum Formen eines Külbels aus einem Posten geschmolzenen Glases, eine Blasstation (9) zum Formen eines Behälters aus dem Külbel, einen Mechanismus zum Weiterleiten (8) eines Külbels von einer Vorformstation (7) zu einer Blasstation (9) und einen Mechanismus zum Weiterleiten (10, 12, 13) eines Behälters von einer Blasstation (9) umfasst, wobei
ein Behälter eine Glasflasche sein kann;
eine Vorformstation (7) eine Vorform und/oder einen Halsring unterhalb der Vorform und/oder einen Stößel zum Formen eines Külbels aus einem Posten geschmolzenen Glases umfassen kann;
die Blasstation (9) eine Blasform und/oder eine Blaseinrichtung zum Aufblasen eines Külbels zum Formen eines Behälters umfassen kann;
ein Mechanismus zum Weiterleiten (8) eines Külbels von einer Vorformstation (7) zu einer Blasstation (9) einen Invertiermechanismus (8) zum Transportieren eines Halsrings zusammen mit einem Külbel zu einer Blasstation umfassen kann;
ein Mechanismus zum Weiterleiten (10, 12, 13) eines Behälters von einer Blasstation (9) einen Entnahmearm (10), einen Schieber (12) und/oder ein Förderband (13) umfassen kann;
eine Beschichtungshaube oberhalb eines Abschnitts des Förderbandes angeordnet sein kann.

8. System gemäß dem vorhergehenden Anspruch, umfassend eine Kamera (20), die dazu eingerichtet ist, gleichzeitig ein Bild einer Vorformstation (7) und einer Blasstation (9) aufzunehmen.

9. System gemäß dem vorvorhergehenden Anspruch, umfassend eine Kamera (20), die dazu eingerichtet ist, gleichzeitig ein Bild eines Förderbandes (13) und einer Beschichtungshaube (14) aufzunehmen.

10. System gemäß einem der vorhergehenden Ansprüche, das so eingerichtet ist, dass die Glasformmaschine (1) bei Detektion eines fehlenden Postens so gesteuert wird, dass sie alle ankommenden Posten ausschleust und/oder Abschnitte (2) in einen sicheren Zustand bewegt, wenn die Anwesenheit eines Bedieners nicht detektiert wird, wohingegen sie die Produktion ohne Unterbrechung fortsetzt, wenn die Anwesenheit eines Bedieners detektiert wird.

11. System gemäß einem der vorhergehenden Ansprüche, das so eingerichtet ist, dass die Glasformmaschine (1) bei Detektion von aneinander klebenden Teilen so gesteuert werden kann, dass sie Abschnitte (2) in einen sicheren Zustand bewegt, wenn die Anwesenheit eines Bedieners nicht detektiert wird, wohingegen sie die Produktion ohne Unterbrechung fortsetzt, wenn die Anwesenheit eines Bedieners detektiert wird.

12. System gemäß einem der vorhergehenden Ansprüche, das so eingerichtet ist, dass die Glasformmaschine (1) bei Detektion von verrutschten und/oder umgefallenen Gegenständen so gesteuert werden kann, dass sie Abschnitte (2) in einen sicheren Zustand bewegt, wenn die Anwesenheit eines Bedieners nicht detektiert wird, wohingegen die Produktion ohne Unterbrechung fortgesetzt wird, wenn die Anwesenheit eines Bedieners detektiert wird.

13. System gemäß einem der vorhergehenden Ansprüche, das so eingerichtet ist, dass die Glasformmaschine (1) im Falle eines Staus von Gegenständen so gesteuert werden kann, dass sie Abschnitte (2) in einen sicheren Zustand bewegt, wenn die Anwesenheit eines Bedieners nicht detektiert wird, wohingegen die Produktion ohne Unterbrechung fortgesetzt wird, wenn die Anwesenheit eines Bedieners detektiert wird.

14. System gemäß einem der vorhergehenden Ansprüche, das so eingerichtet ist, dass die Glasformmaschine (1) bei wiederholter Detektion von Gegenständen, die nicht der gewünschten Qualität entsprechen, so gesteuert werden kann, dass sie Abschnitte (2) in einen sicheren Zustand bewegt, wenn die Anwesenheit eines Bedieners nicht detektiert wird, wohingegen die Produktion ohne Unterbrechung fortgesetzt wird und nur Gegenstände mit mangelhafter Qualität ausgeschleust werden, wenn die Anwesenheit einer Bedienperson detektiert wird.

15. Speichermedium, umfassend ein Programm, das Befehle umfasst, um das System gemäß einem der vorhergehenden Ansprüche zu veranlassen, eine Störung einer Glasformmaschine (1) in Abhängigkeit von der Anwesenheit eines Bedieners zu verarbeiten.

## Revendications

1. Système de traitement d'anomalies (16) apte à traiter un dysfonctionnement d'une machine de formage de verre (1), comprenant ;
une unité de détection de dysfonctionnement (18) pour détecter un dysfonctionnement de la machine de formage de verre (1) ;
une unité de détection de présence (19) pour détecter la présence d'un opérateur ;
une unité de contrôle (17) pour contrôler la machine de formage de verre (1) en cas d'un dysfonctionnement détecté ;
**caractérisé en ce que** le système de traitement d'anomalies (16) est configuré pour que, en cas d'un dysfonctionnement, le contrôle de la machine de formage de verre (1) par le système de traitement d'anomalies (1) est dépendant de si la présence d'un opérateur est détectée ou non.

2. Système selon la revendication 1 comprenant un ou plusieurs capteurs (2) configurés pour détecter un dysfonctionnement de la machine de formage de verre (1), et/ou la présence d'un opérateur.

3. Système selon l'une des revendications précédentes comprenant une unité de contrôle (17) apte à lire et/ou à régler des informations d'état et/ou des paramètres de fonctionnement/configuration de la machine de formage de verre (1).

4. Système selon l'une des revendications précédentes configuré pour détecter la présence d'un opérateur au moment de la détection d'un dysfonctionnement uniquement si la distance entre l'emplacement de l'opérateur et l'emplacement du dysfonctionnement détecté ne dépasse pas 15 mètres, dans une forme de réalisation préférée uniquement si la distance ne dépasse pas 5 mètres, et dans une forme de réalisation la plus préférée uniquement si la distance ne dépasse pas 1 mètre.

5. Système selon l'une des revendications précédentes comprenant une ou plusieurs caméras (20).

6. Système selon la revendication précédente comprenant un système de traitement d'images configuré pour détecter un dysfonctionnement et/ou la présence d'un opérateur en traitant des images capturées par la une ou plus de caméras (20).

7. Système selon l'une des revendications précédentes apte à traiter les dysfonctionnements d'une machine de formage de verre (1), tandis que la machine de formage de verre (1) comprend un poste d'ébauche (7) pour former une paraison à partir d'une goutte de verre fondu, un poste de soufflage (9) pour former un contenant à partir de la paraison, un mécanisme d'acheminement (8) d'une paraison depuis un poste d'ébauche (7) vers un poste de soufflage (9), et un mécanisme d'acheminement (10, 12, 13) d'un contenant depuis un poste de soufflage (9), tandis que
un contenant peut être une bouteille en verre ;
un poste d'ébauche (7) peut comprendre un moule d'ébauche et/ou un anneau de col sous le moule d'ébauche et/ou un plongeur pour former une paraison à partir d'une goutte de verre fondu ;
le poste de soufflage (9) peut comprendre un moule de soufflage et/ou un dispositif de soufflage pour faire sauter une paraison afin de former un contenant
un mécanisme d'acheminement (8) d'une paraison depuis un poste d'ébauche (7) vers un poste de soufflage (9) peut comprendre un mécanisme d'inversion (8) pour transporter un anneau de col avec une paraison vers un poste de soufflage
un mécanisme d'acheminement (10, 12, 13) d'un contenant depuis un poste de soufflage (9) peut comprendre un bras d'extraction (10), un poussoir (12) et/ou une bande de transport (13) ;
une hotte d'enrobage peut être positionnée au-dessus d'une section de la bande de transport.

8. Système selon la revendication précédente comprenant une caméra (20) configurée pour capturer en même temps une image d'un poste d'ébauche (7) et d'un poste de soufflage (9).

9. Système selon la revendication avant-précédente comprenant une caméra (20) configurée pour capturer en même temps une image d'une bande de transport (13) et d'une hotte d'enrobage (14).

10. Système selon l'une des revendications précédentes configuré pour que, en cas de détection d'une paraison manquante, la machine de formage de verre (1) soit contrôlée pour rejeter toutes les paraisons entrantes et/ou pour déplacer des sections (2) vers un état sûr si la présence d'un opérateur n'est pas détectée, tandis qu'elle continue la production sans interruption si la présence d'un opérateur est détectée.

11. Système selon l'une des revendications précédentes configuré pour que, en cas de détection d'articles collés l'un avec l'autre, la machine de formage de verre (1) peut être contrôlée pour déplacer des sections (2) vers un état sûr si la présence d'un opérateur n'est pas détectée, tandis que pour continuer la production sans interruption si la présence d'un opérateur est détectée.

12. Système selon l'une des revendications précédentes configuré pour que, en cas de détection d'articles déplacés et/ou tombés, la machine de formage de verre (1) peut être contrôlée pour déplacer des sections (2) vers un état sûr si la présence d'un opérateur n'est pas détectée, tandis que pour continuer la production sans interruption si la présence d'un opérateur est détectée.

13. Système selon l'une des revendications précédentes configuré pour que, en cas de détection d'un bourrage d'articles, la machine de formage du verre (1) peut être contrôlée pour déplacer des sections (2) vers un état sûr si la présence d'un opérateur n'est pas détectée, tandis que pour continuer la production sans interruption si la présence d'un opérateur est détectée.

14. Système selon l'une des revendications précédentes configuré pour que, en cas de détection répétée d'articles ne répondant pas à la qualité souhaitée, la machine de formage de verre (1) peut être contrôlée pour déplacer des sections (2) vers un état sûr si la présence d'un opérateur n'est pas détectée, tandis que pour continuer la production sans interruption tout en ne rejetant des articles de qualité insuffisante que si la présence d'un opérateur est détectée.

15. Support de stockage comprenant un logiciel qui comprend des instructions pour amener le système selon l'une des revendications précédentes à traiter un dysfonctionnement d'une machine de formage de verre (1) en fonction de la présence d'un opérateur.
